# EUROPEAN PATENT APPLICATION

(11) **EP 4 712 550 A1**
(43) Date of publication of application: **18.03.2026**
(21) Application number: 24822418.0
(22) Date of filing: 26.04.2024
(51) Int. Cl.: H04W 28/08

(54) **PACKET FORWARDING METHOD, NETWORK NODE, AND STORAGE MEDIUM**

(30) Priority: 14.06.2023 CN 202310704193
(71) Applicant: ZTE Corporation, Shenzhen, Guangdong 518057 (CN)
(72) Inventor: CHEN, Xiao, Shenzhen, Guangdong 518057 (CN); PENG, Shaofu, Shenzhen, Guangdong 518057 (CN)
(74) Representative: Aipex B.V.
(86) International application number: PCT/CN2024/089963
(87) International publication number: WO 2024/255463

(57) **Abstract**

Provided are a packet forwarding method, a network node, and a storage medium. The packet forwarding method applied to a first network node includes: configuring an edge shaping delay budget for a target service flow accessed from a source client (S110); determining an egress damping delay budget of a corresponding packet according to the edge shaping delay budget and an ingress shaping delay of each packet in the target service flow (S 120), where the target service flow includes one or more packets; and sending the each packet in the target service flow to a second network node according to a predetermined target path so that the second network node forwards the corresponding packet in the target service flow to a destination client according to the egress damping delay budget (S130).

## Description

### TECHNICAL FIELD

The present application relates to the field of communication technologies, for example, a packet forwarding method, a network node, and a storage medium.

### BACKGROUND

In a deterministic networking architecture, the quality of service (QoS) objectives for deterministic service forwarding include: the minimum delay and the maximum delay from the source to the destination and the bounded delay and jitter; the allowable packet loss rate; and an upper bound on out-of-order packet delivery. To achieve these objectives, the deterministic networking adopts methods such as resource reservation, explicit routing, and service protection. Resource reservation refers to the occupation of resources by service traffic, either exclusively or shared in a certain proportion, such as physical links, link bandwidth, and queue resources. Explicit routing refers to the predetermined selection of transmission paths for service flows in the network to ensure routing stability without being affected by real-time changes in the network topology. Based on this, the upper bound on end-to-end delay and the upper bound on jitter can be accurately calculated. Service protection refers to sending multiple copies of service traffic simultaneously along multiple disjoint paths to reduce the packet loss rate. In general, a deterministic path is a strictly explicit path calculated by a centralized controller, and resources are reserved on the nodes along the path to satisfy the service-level agreement (SLA) requirements of deterministic services.

To satisfy the QoS objectives for the preceding deterministic services, the following three packet scheduling mechanisms are proposed: the packet timeslot scheduling mechanism, the deadline scheduling mechanism, and the multi-cyclic queuing and forwarding (multi-CQF) scheduling mechanism.

However, these scheduling mechanisms merely guarantee the delay and jitter indicators of the transmission paths in the network, without considering the shaping delay caused by traffic policing when the service flow is received at the network ingress node. Traffic policing refers to rate limiting and shaping performed by the network ingress node on the incoming service flow, ensuring that the service flow released to the network conforms to the traffic specification (TSpec) of the service. If the shaping delay caused by traffic policing is not handled, for the same service flow, some packets experience shorter shaping delay, while others experience longer shaping delay, resulting in larger delay jitter and failing to satisfy the service requirements of deterministic services.

### SUMMARY

In view of this, embodiments of the present application provide a packet forwarding method, a network node, and a storage medium, thereby eliminating the delay jitter for each packet in a target service flow at the edge and ensuring the service requirements of deterministic services.

An embodiment of the present application provides a packet forwarding method. The packet forwarding method is applied to a first network node and includes the following.

An edge shaping delay budget is configured for a target service flow accessed from a source client.

An egress damping delay budget of a corresponding packet is determined according to the edge shaping delay budget and an ingress shaping delay of each packet in the target service flow, where the target service flow includes one or more packets.

Each packet in the target service flow is sent to a second network node according to a predetermined target path so that the second network node forwards the corresponding packet in the target service flow to a destination client according to the egress damping delay budget.

An embodiment of the present application provides a packet forwarding method. The packet forwarding method is applied to a second network node and includes the following.

A target service flow sent by a first network node according to a predetermined target path is received, where the target path is determined according to a path delay requirement determined based on an end-to-end delay requirement of the target service flow and an edge shaping delay budget.

A corresponding packet is forwarded to a destination client according to an egress damping delay budget of each packet in the target service flow, where the target service flow includes one or more packets.

An embodiment of the present application provides a first network node. The first network node includes a memory and one or more processors.

The memory is configured to store one or more programs.

The one or more processors are configured to perform the packet forwarding method of any previous embodiment when executing the one or more programs.

An embodiment of the present application provides a second network node. The second network node includes a memory and one or more processors.

The memory is configured to store one or more programs.

The one or more processors are configured to perform the packet forwarding method of any previous embodiment when executing the one or more programs.

An embodiment of the present application provides a storage medium storing a computer program, where when the computer program is executed by a processor, the packet forwarding method of any previous embodiment is performed.

### BRIEF DESCRIPTION OF DRAWINGS

FIG. 1 is a flowchart of a packet forwarding method according to an embodiment of the present application.
FIG. 2 is a flowchart of another packet forwarding method according to an embodiment of the present application.
FIG. 3 is a schematic diagram illustrating the relationship between delay parameters in a deterministic network according to an embodiment of the present application.
FIG. 4 is a schematic diagram illustrating packet header configuration according to an embodiment of the present application.
FIG. 5 is a schematic diagram illustrating another type of packet header configuration according to an embodiment of the present application.
FIG. 6 is a schematic diagram illustrating the implementation of packet forwarding according to an embodiment of the present application.
FIG. 7 is a block diagram of a packet forwarding apparatus according to an embodiment of the present application.
FIG. 8 is a block diagram of another packet forwarding apparatus according to an embodiment of the present application.
FIG. 9 is a diagram illustrating the structure of a network node according to an embodiment of the present application.

### DETAILED DESCRIPTION

The embodiments of the present application are described hereinafter in conjunction with the drawings. The present application is described hereinafter in conjunction with embodiments and the drawings. The examples described hereinafter are intended to explain the present application and not to limit the scope of the present application.

In the related technical solutions, for the same service flow, some packets experience shorter shaping delay, while others experience longer shaping delay, resulting in larger delay jitter and failing to satisfy the requirements of deterministic services.

In view of this, the present application proposes a packet forwarding method in which an edge shaping delay budget is configured for a target service flow. The edge shaping delay budget is shared by the network ingress node (that is, the head node of the deterministic path) and the network egress node (that is, the tail node of the deterministic path). The path delay requirement of the deterministic path is obtained by subtracting the edge shaping delay budget from the end-to-end delay requirement of the target service flow. Then, the path that satisfies the path delay requirement is calculated in the network and used as a target path. The target path is used to provide bearer services for the target service flow. When the head node transmits the target service flow, the encapsulated packet header carries the edge shaping delay budget and the ingress shaping delay or directly carries the egress damping delay budget. The tail node obtains the egress damping delay budget from the packet header and delays the delivery of the packet to the destination client accordingly.

By excluding the ingress shaping delay of the service flow during path calculation and carrying the egress damping delay budget during forwarding, the target service flow can eliminate delay jitter at the edge with a basis, which is very beneficial for satisfying the requirements of deterministic services. The embodiments of the present application can be applied to scenarios such as an IP radio access network (IPRAN)/slicing packet network (SPN) and a metropolitan area network/backbone network.

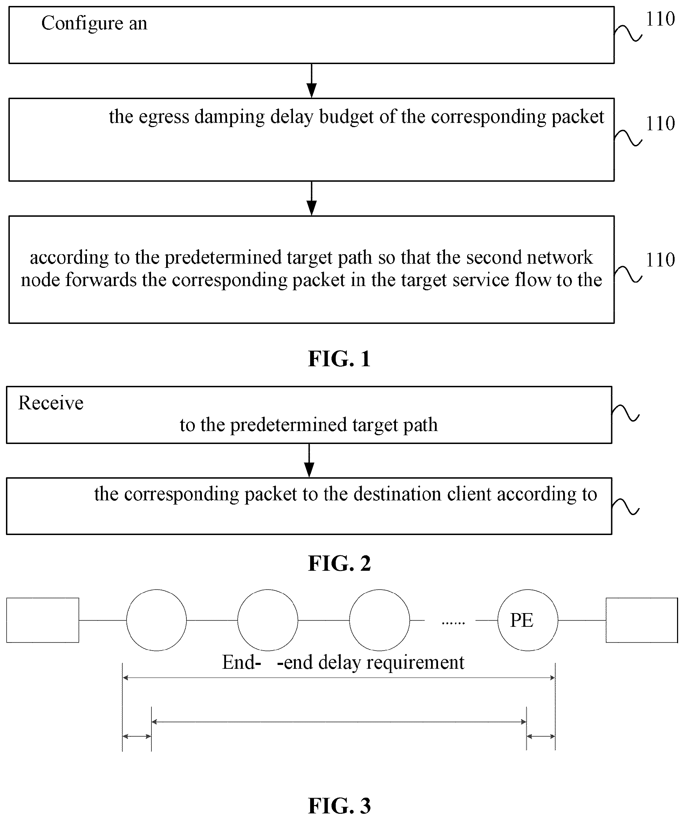

In an embodiment, FIG. 1 is a flowchart of a packet forwarding method according to an embodiment of the present application. This embodiment is applied to the case of eliminating delay jitter of deterministic service flows at the edge. This embodiment may be implemented by a first network node. In this example, the first network node may be the head node of the deterministic path. As shown in FIG. 1, this embodiment includes S110 to S130.

In S110, the edge shaping delay budget is configured for the target service flow accessed from the source client.

The source client refers to the client that provides service flows for the deterministic network. That is, the deterministic network provides a deterministic forwarding service for the target service flow accessed from the source client. In this embodiment, the edge shaping delay budget is shared by the ingress node in the deterministic network (that is, the head node of the deterministic path) and the egress node in the network (that is, the tail node of the deterministic path).

In S120, the egress damping delay budget of the corresponding packet is determined according to the edge shaping delay budget and the ingress shaping delay of each packet in the target service flow.

The ingress shaping delay refers to the actual shaping delay generated by performing traffic policing on the target service flow at the head node. The target service flow may include one or more packets, and the ingress shaping delay may differ between any two packets. Moreover, the damping delay calculation may differ between any two tail nodes, but the edge shaping delay budget of each packet in the same target service flow is the same. The maximum shaping delay faced by different target service flows at the head node may be different, depending on the traffic specification of the target service flow, the actual arrival curve, and the shaping parameters configured by the head node for the target service flow. Similarly, the edge shaping delay budget may differ between different target service flows, depending on the traffic specification of the target service flow, the actual arrival curve, and the shaping parameters configured by the head node for the target service flow.

In this embodiment, the egress damping delay budget of the corresponding packet may be obtained by subtracting the ingress shaping delay from the edge shaping delay budget.

In S130, each packet in the target service flow is sent to the second network node according to the predetermined target path so that the second network node forwards the corresponding packet in the target service flow to the destination client according to the egress damping delay budget.

The second network node may be the tail node of the deterministic path, the destination client refers to the receiving end of the target service flow, and the target path refers to the deterministic path for transmitting the target service flow. In this embodiment, after determining the target path of the target service flow, the first network node sends each packet in the target service flow to the second network node along the target path so that the second network node forwards the corresponding packet to the destination client according to the egress damping delay budget, thereby ensuring that packets with different ingress shaping delays in the target service flow arrive at the destination client as simultaneously as possible. In this manner, delay jitter of the target service flow at the edge can be eliminated.

In an embodiment, the packet forwarding method applied to the first network node further includes: determining the path delay requirement of the target service flow according to the end-to-end delay requirement of the target service flow and the edge shaping delay budget; and determining the target path of the target service flow based on the path delay requirement. In this embodiment, the path delay requirement of the deterministic path for carrying the target service flow is determined according to the end-to-end delay requirement of the target service flow and the edge shaping delay budget, the path delay requirement of the deterministic path may be obtained by subtracting the edge shaping delay budget from the end-to-end delay requirement, the path that satisfies the path delay requirement is calculated in the network and used as the target path, and the target path is used to provide a transmission service for the target service flow.

In an embodiment, the packet forwarding method applied to the first network node further includes: acquiring the actual path delay of each packet in the target service flow on the target path; determining a delay deviation value of the corresponding packet based on the path delay requirement and the actual path delay; and sending the delay deviation value to the second network node. In the case where the target service flow is transmitted using the target path, different scheduling mechanisms may be adopted for packet forwarding. Accordingly, under different scheduling mechanisms, the delay deviation value may occur, and the delay deviation value is the deviation between the actual path delay when the packet arrives at the tail node and the path delay requirement. The corresponding delay deviation value may be obtained by subtracting the actual path delay from the path delay requirement of the target path. For example, in the case where the deadline scheduling mechanism is adopted for the target path, the delay deviation value may occur in the packet. In this case, the delay deviation value may be sent to the second network node so that the second network node can forward the corresponding packet in the target service flow to the destination client according to the sum of the delay deviation value and the egress damping delay budget. In this manner, the deviation between the end-to-end delay requirement of the service and the actual end-to-end delay of the service is zero, thereby achieving service delivery with zero delay jitter.

In an embodiment, the encapsulated packet header in the target service flow carries the edge shaping delay budget and the ingress shaping delay of the corresponding packet; or the packet header of the target service flow carries the egress damping delay budget of the corresponding packet. In the case where the first network node of the target path receives the target service flow from the source client, the packet header of each encapsulated packet in the target service flow carries the edge shaping delay budget and the ingress shaping delay of the corresponding packet or directly carries the egress damping delay budget of the corresponding packet, and then the first network node forwards the corresponding packet to the second network node along the target path.

In an embodiment, the encapsulated packet header in the target service flow further carries the delay deviation value of the corresponding packet. If the delay deviation value occurs during the forwarding process of the target service flow, the first network node sends the delay deviation value to the second network node through the packet header of the corresponding packet in the target service flow.

In an embodiment, the edge shaping delay budget is greater than or equal to the maximum ingress shaping delay corresponding to the target service flow. In this embodiment, the edge shaping delay budget is shared by the head node and the tail node, that is, the edge shaping delay budget is the sum of the ingress shaping delay and the egress damping delay budget. To ensure the accuracy of the path delay requirement of the deterministic path of the target service flow, the edge shaping delay budget configured for the target service flow is greater than or equal to the maximum ingress shaping delay corresponding to all packets in the target service flow.

In an embodiment, FIG. 2 is a flowchart of another packet forwarding method according to an embodiment of the present application. This embodiment is applied to the case of eliminating delay jitter of deterministic service flows at the edge. This embodiment may be implemented by a second network node. As shown in FIG. 2, this embodiment includes S210 and S220.

In S210, the target service flow sent by the first network node according to the predetermined target path is received.

The target path is determined according to the path delay requirement determined based on the end-to-end delay requirement of the target service flow and the edge shaping delay budget.

In S220, the corresponding packet is forwarded to the destination client according to the egress damping delay budget of each packet in the target service flow.

In this embodiment, after receiving the target service flow sent by the first network node according to the predetermined target path, the second network node forwards the corresponding packet to the destination client according to the egress damping delay budget of each packet in the target service flow.

In an embodiment, in the case where the encapsulated packet header encapsulated in the target service flow carries the edge shaping delay budget and the ingress shaping delay of the corresponding packet, the packet forwarding method applied to the second network node further includes: determining the egress damping delay budget of the corresponding packet in the target service flow according to the edge shaping delay budget and the ingress shaping delay. In the case where the encapsulated packet header in the target service flow carries the edge shaping delay budget and the ingress shaping delay of the corresponding packet, the second network node needs to calculate the egress damping delay budget of the corresponding packet according to the edge shaping delay budget and the ingress shaping delay.

In an embodiment, a buffer or queue is established at the second network node for the target service flow, and the target service flow is temporarily stored in the buffer or queue. In this embodiment, the second network node needs to forward the corresponding packet to the destination client according to the egress damping delay budget of the packet in the target service flow. That is, at least some packets in the target service flow need to be temporarily stored at the second network node until the egress damping delay budget is reached. Therefore, the buffer or queue needs to be established at the second network node for the target service flow so that the target service flow waits in the buffer or queue for the time required by the egress damping delay budget before being sent to the destination client.

In an embodiment, the packet forwarding method applied to the second network node further includes: receiving the delay deviation value sent by the first network node, where the delay deviation value is determined based on the path delay requirement and the actual path delay of the corresponding packet in the target service flow; and forwarding the corresponding packet to the destination client according to the delay deviation value and the egress damping delay budget of each packet in the target service flow. In this embodiment, the second network node can acquire the delay deviation value of the packet in the target service flow on the target path, and the second network node may use the sum of the egress damping delay budget and the delay deviation value of the target path as the waiting time of the target service flow in the buffer or queue and then send the target service flow to the destination client so that the deviation between the end-to-end delay requirement and the actual end-to-end delay of the target service flow is zero, thereby achieving service delivery with zero delay jitter.

In an embodiment, the packet forwarding of the target service flow from the source client to the destination client includes three processes: calculating the deterministic path for the target service flow; processing related to the head node sending the target service flow; and processing related to the tail node receiving the target service flow.

The first process is calculating the deterministic path for the target service flow, including the implementation processes below.

First, the edge shaping delay budget is configured for the target service flow. The edge shaping delay budget is shared by the ingress node of the deterministic network (that is, the head node of the deterministic path) and the egress node of the deterministic network (that is, the tail node of the deterministic path). The following is satisfied: edge shaping delay budget = ingress shaping delay + egress damping delay budget.

The ingress shaping delay is the shaping delay actually generated by performing traffic policing on the target service flow at the head node. The egress damping delay budget is obtained by subtracting the ingress shaping delay from the edge shaping delay budget.

It is to be noted that the edge shaping delay budget configured for the target service flow must not be less than the maximum possible ingress shaping delay. It is also to be noted that the maximum ingress shaping delays faced by different target service flows at the head node may be different, depending on the traffic specification (TSpec) of the target service flow, the actual arrival curve, and the shaping parameters configured by the head node for the target service flow.

Then, the delay requirement of the deterministic path for carrying the target service flow is determined according to the end-to-end delay requirement of the target service flow and the edge shaping delay budget, that is, the path delay requirement is equal to the difference between the end-to-end delay requirement of the service flow and the edge shaping delay budget.

The deterministic path that satisfies the path delay requirement is calculated in the network and used as the target path, and the target path is used to provide a transmission service for the target service flow.

FIG. 3 is a schematic diagram illustrating the relationship between delay parameters in a deterministic network according to an embodiment of the present application. As shown in FIG. 3, the source client is CE1, the destination client is CE2, the first network node is PE1, and the second network node is PE2. The end-to-end delay requirement of the service is the sum of the edge shaping delay budget and the path delay requirement, and the edge shaping delay budget is the sum of the ingress shaping delay and the egress damping delay budget.

In addition, the process of calculating the target path according to the path delay requirement depends on the packet scheduling mechanism adopted by each network node in the deterministic network, and different packet scheduling mechanisms correspond to different deterministic path calculation processes. In the embodiments of the present application, the approximate calculation processes of the target path corresponding to several typical packet scheduling mechanisms are briefly described by way of example.

In the first process, when the packet timeslot scheduling mechanism is adopted, for any candidate path, the total residence delay budget value of all the nodes on the candidate path is obtained by subtracting the sum of the propagation delays of all the links on the candidate path from the path delay requirement. Then, timeslot resources are reserved on each link on the candidate path so that the sum of the residence delay evaluation values generated on all the nodes matches the total residence delay budget value.

In the second process, when the deadline scheduling mechanism is adopted, for any candidate path, the total residence delay budget value of all the nodes on the candidate path is obtained by subtracting the sum of the propagation delays of all the links on the candidate path from the path delay requirement. Then, the total residence delay budget value is divided by the hop count of the path to obtain the planned residence time for each node. Subsequently, delay resources of the delay level corresponding to the planned residence time are reserved on each link on the candidate path.

In the third process, when the multi-CQF scheduling mechanism is adopted, for any candidate path, the total residence delay budget value of all the nodes on the candidate path is obtained by subtracting the sum of the propagation delays of all the links on the candidate path from the path delay requirement. Then, an appropriate cycle level is selected, and bandwidth resources corresponding to the cycle level are reserved so that the sum of the residence delay evaluation values generated on all the nodes matches the total residence delay budget value.

The second process is processing related to the head node sending the target service flow, including the implementation processes below.

When the head node of the target path receives the target service flow from the source client, the packet header encapsulated for the target service flow carries the edge shaping delay budget and the ingress shaping delay or directly carries the egress damping delay budget, and then the packet is sent to the tail node along the target path.

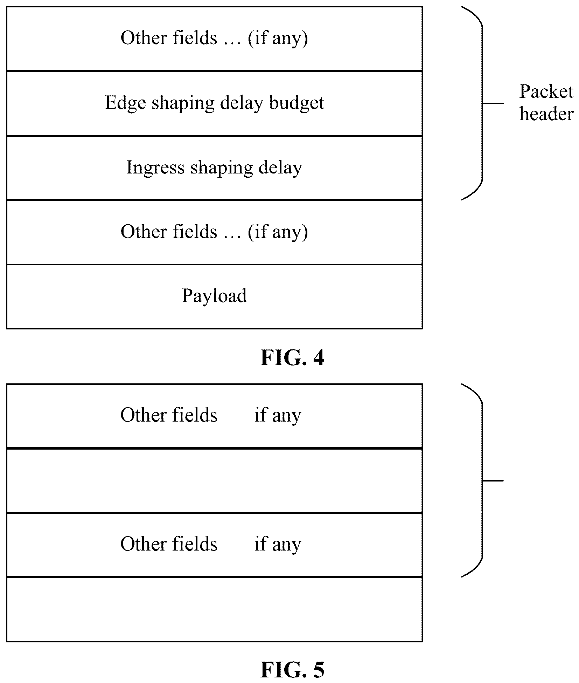

FIG. 4 is a schematic diagram illustrating packet header configuration according to an embodiment of the present application. As shown in FIG. 4, the packet header carries the edge shaping delay budget and the ingress shaping delay.

FIG. 5 is a schematic diagram illustrating another type of packet header configuration according to an embodiment of the present application. As shown in FIG. 5, the packet header directly carries the egress damping delay budget.

The packet header may be any L2 or L3 packet header, such as the Ethernet header, the IPv4 header, the IPv6 header, or the Multiprotocol Label Switching (MPLS) header.

Of course, the head node carries metadata related to the scheduling mechanism adopted by the target path in the encapsulated packet header, which is used for instructing the packet to adopt the corresponding scheduling mechanism and access deterministic forwarding resources at each node.

The third process is processing related to the tail node receiving the target service flow, including the implementation processes below.

After receiving the packet, the tail node of the target path obtains the egress damping delay budget of the corresponding packet from the packet header. If the received packet header carries the edge shaping delay budget and the ingress shaping delay, then the egress damping delay budget is equal to the difference between the edge shaping delay budget and the ingress shaping delay.

The tail node delays the delivery of the packet to the destination client according to the egress damping delay budget. Therefore, the buffer or queue needs to be established at the tail node for the target service flow so that the target service flow waits in the buffer or queue for the time required by the egress damping delay budget before being sent to the destination client.

Optionally, if the tail node can obtain the delay deviation value of the packet on the target path (for example, when the target path adopts the deadline scheduling mechanism, the packet carries the delay deviation value, which reflects the deviation between the actual path delay when the packet arrives at the tail node and the path delay requirement, that is, the difference between the path delay requirement and the actual path delay), then the tail node can use the sum of the egress damping delay budget and the delay deviation value of the target path as the waiting time of the service flow in the buffer or queue and then send the service flow to the destination client so that the deviation between the end-to-end delay requirement and the actual end-to-end delay of the target service flow is zero, thereby achieving service delivery with zero delay jitter. Under some scheduling mechanisms, the forwarded packets carry the delay deviation values; and under other scheduling mechanisms, the forwarded packets do not carry the delay deviation values. Therefore, this operation is optional.

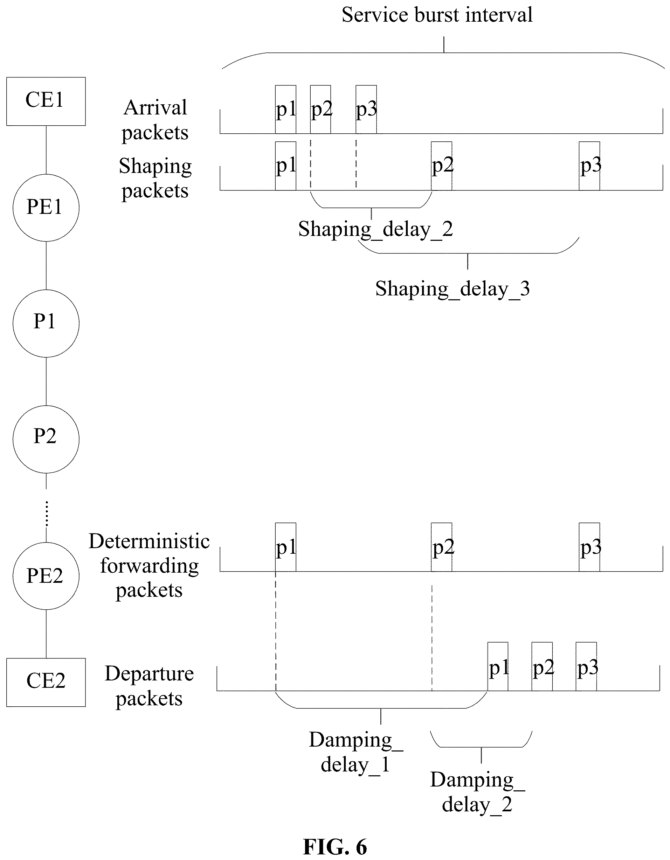

FIG. 6 is a schematic diagram illustrating the implementation of packet forwarding according to an embodiment of the present application. As shown in FIG. 6, at the ingress node PE1 of the deterministic network, the deterministic forwarding service is provided for the target service flow accessed from the source client CE1, the destination client is CE2, and the egress node of the deterministic forwarding path is PE2. The traffic specification (TSpec) of the target service flow has a periodic characteristic. Assuming the service burst interval is 100us, three packets p1, p2, and p3 are periodically sent every 100us (for simplicity, it is assumed that three packets are of an equal length, which is 1000 bits). It can be seen that the bandwidth resource required by the target service flow is 30 Mbps.

It is assumed that the ingress node PE1 of the network configures a leaky bucket shaping parameter for the preceding target service flow, with a bucket depth of 1000 bits and a bucket rate of 30 Mbps.

It is assumed that the arrival curve of the target service flow when the target service flow actually arrives at the ingress node PE1 is shown in FIG. 6, that is, p1, p2, and p3 are closely clustered. After leaky bucket shaping, the shaping delays faced by p1, p2, and p3 are shaping_delay_1, shaping_delay_2, and shaping_delay_3, respectively. The shaping delay shaping_delay_1 faced by p1 is 0, because the leaky bucket is full when p1 arrives at the ingress node PE1; while the shaping delay shaping_delay_2 faced by p2 and the shaping delay shaping_delay_3 faced by p3 are both not zero. p2 and p3 are not sent until enough tokens accumulate in the leaky bucket. It is assumed that shaping_delay_2 is 28us and shaping_delay_3 is 51us. After shaping, p1, p2, and p3 are evenly distributed within the service burst interval.

Assuming that the arrival curve of the target service flow is stable at the ingress node PE1, then shaping_delay_3 is the maximum ingress shaping delay that the target service flow may face. In this manner, the edge shaping delay budget edge_shaping_delay_budget may be configured to be shaping_delay_3.

Then, the egress damping delay budget damping _delay_1 of p1 is shaping_delay_3, which is equal to 51us; the egress damping delay budget damping_delay_2 of p2 is shaping_delay_3 - shaping_delay_2, which is 23us; and the egress damping delay budget damping_delay_3 of p3 is 0.

When the target service flow is encapsulated and sent along the deterministic forwarding path at the ingress node PE1 of the network, the encapsulated packet header may carry the edge shaping delay budget and the ingress shaping delay or directly carry the egress damping delay budget. For example, the packet header encapsulated for the packet p1 carries the edge shaping delay budget (that is, 51) and the ingress shaping delay (that is, 0) or directly carries the egress damping delay budget (that is, 51); the packet header encapsulated for the packet p2 carries the edge shaping delay budget (that is, 51) and the ingress shaping delay (that is, 28) or directly carries the egress damping delay budget (that is, 23); and the packet header encapsulated for the packet p3 carries the edge shaping delay budget (that is, 51) and the ingress shaping delay (that is, 51) or directly carries the egress damping delay budget (that is, 0).

Assuming that the deterministic forwarding path adopts a scheduling mechanism that can guarantee the delay and jitter (such as the multi-CQF, deadline, or packet timeslot scheduler mechanism), the distribution of the packets of the target service flow, which leaves the corresponding type of scheduler, within the service burst interval at the egress node PE2 of the deterministic forwarding path is consistent with the shaping result at the ingress node PE1 to a certain extent (for example, the deadline scheduler can maintain consistency based on the perceived delay deviation value, while the multi-CQF or packet timeslot scheduler introduces jitter related to the cycle length or timeslot length). In any case, the egress node PE2 can obtain the egress damping delay budget from the packet header, and the packet waits in the buffer or queue for extra time according to the egress damping delay budget before being sent to the destination client CE2. Of course, the egress node PE2 may combine the delay deviation value (if any) provided by the scheduling mechanism and the egress damping delay budget into one step for processing, and the packet waits in the buffer or queue for the combined duration before being sent to the destination client CE2.

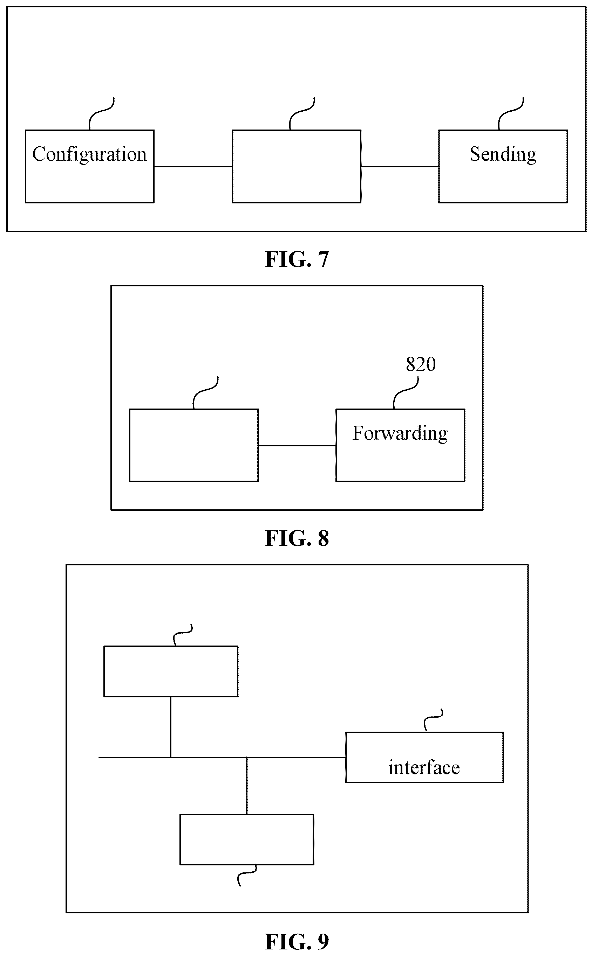

In an embodiment, FIG. 7 is a block diagram of a packet forwarding apparatus according to an embodiment of the present application. This embodiment is applied to a first network node. As shown in FIG. 7, the packet forwarding apparatus in this embodiment includes a configuration module 710, a determination module 720, and a sending module 730.

The configuration module 710 is configured to configure an edge shaping delay budget for a target service flow accessed from a source client.

The determination module 720 is configured to determine an egress damping delay budget of a corresponding packet according to the edge shaping delay budget and an ingress shaping delay of each packet in the target service flow.

The sending module 730 is configured to send each packet in the target service flow to a second network node according to a predetermined target path so that the second network node forwards the corresponding packet in the target service flow to a destination client according to the egress damping delay budget.

In an embodiment, the packet forwarding apparatus applied to the first network node further includes a determination module.

The determination module is further configured to determine a path delay requirement of the target service flow according to an end-to-end delay requirement of the target service flow and the edge shaping delay budget.

The determination module is further configured to determine the target path of the target service flow based on the path delay requirement.

In an embodiment, the packet forwarding apparatus applied to the first network node further includes an acquisition module, a determination module, and a sending module.

The acquisition module is configured to acquire an actual path delay of each packet in the target service flow on the target path.

The determination module is further configured to determine a delay deviation value of the corresponding packet based on the path delay requirement and the actual path delay.

The sending module is further configured to send the delay deviation value to the second network node.

In an embodiment, an encapsulated packet header in the target service flow carries the edge shaping delay budget and the ingress shaping delay of the corresponding packet; or a packet header of the target service flow carries the egress damping delay budget of the corresponding packet.

In an embodiment, an encapsulated packet header in the target service flow further carries a delay deviation value of the corresponding packet.

In an embodiment, the edge shaping delay budget is greater than or equal to the maximum ingress shaping delay corresponding to the target service flow.

The packet forwarding apparatus in this embodiment is configured to perform the packet forwarding method applied to the first network node according to the embodiment shown in FIG. 1. The implementation principles and technical effects of the packet forwarding apparatus in this embodiment are similar to those of the packet forwarding method applied to the first network node according to the embodiment shown in FIG. 1 and thus are not described again here.

In an embodiment, FIG. 8 is a block diagram of another packet forwarding apparatus according to an embodiment of the present application. This embodiment may be implemented by a second network node. As shown in FIG. 8, the packet forwarding apparatus in this embodiment includes a receiving module 810 and a forwarding module 820.

The receiving module 810 is configured to receive a target service flow sent by a first network node according to a predetermined target path, where the target path is determined according to a path delay requirement determined based on an end-to-end delay requirement of the target service flow and an edge shaping delay budget.

The forwarding module 820 is configured to forward a corresponding packet to a destination client according to an egress damping delay budget of each packet in the target service flow.

In an embodiment, in the case where an encapsulated packet header in the target service flow carries the edge shaping delay budget and an ingress shaping delay of the corresponding packet, the packet forwarding apparatus applied to the second network node further includes a determination module.

The determination module is configured to determine the egress damping delay budget of the corresponding packet in the target service flow according to the edge shaping delay budget and the ingress shaping delay.

In an embodiment, a buffer or queue is established at the second network node for the target service flow, and the target service flow is temporarily stored in the buffer or queue.

In an embodiment, the packet forwarding apparatus applied to the second network node further includes a receiving module and a forwarding module.

The receiving module is further configured to receive a delay deviation value sent by the first network node, where the delay deviation value is determined based on the path delay requirement and an actual path delay of the corresponding packet in the target service flow.

The forwarding module is further configured to forward the corresponding packet to the destination client according to the delay deviation value and the egress damping delay budget of each packet in the target service flow.

The packet forwarding apparatus in this embodiment is configured to perform the packet forwarding method applied to the second network node according to the embodiment shown in FIG. 2. The implementation principles and technical effects of the packet forwarding apparatus in this embodiment are similar to those of the packet forwarding method applied to the second network node according to the embodiment shown in FIG. 2 and thus are not described again here.

In an embodiment, FIG. 9 is a diagram illustrating the structure of a network node according to an embodiment of the present application. As shown in FIG. 9, the network node (also referred to as a communication device, a network device, or a communication node) provided in the present application includes a processor 910, a memory 920, and a communication interface 930. One or more processors 910 may be provided in the network node, and FIG. 9 is illustrated by using an example in which one processor 910 is provided. One or more memories 920 may be provided in the network node, and FIG. 9 is illustrated by using an example in which one memory 920 is provided. The processor 910, the memory 920, and the communication interface 930 in the network node may be connected via a bus or in other manners. FIG. 9 shows a connection via the bus as an example. In this embodiment, the network node may be a first network node.

As a computer-readable storage medium, the memory 920 may be configured to store software programs, computer-executable programs, and modules, such as program instructions/modules corresponding to the network node of any embodiment of the present application (for example, the configuration module 710, the determination module 720, and the sending module 730 in the packet forwarding apparatus). The memory 920 may include a program storage region and a data storage region. The program storage region may store an operating system and an application program required by at least one function. The data storage region may store data created according to the use of the device. Additionally, the memory 920 may include a high-speed random-access memory and may also include a nonvolatile memory, such as at least one magnetic disk memory, a flash memory, or another nonvolatile solid-state memory. In some examples, the memory 920 may be remote from the processor 910 and connectable to the device via a network. Examples of the network include, but are not limited to, the Internet, an intranet, a local area network, a mobile communication network, and a combination thereof. The communication interface 930 is used for enabling the first network node to establish a communication connection with other network nodes (such as the second network node).

In the case where the network node is the first network node, the device may be configured to perform the packet forwarding method applied to the first network node according to any preceding embodiment and has corresponding functions and effects.

In the case where the network node is the second network node, the device may be configured to perform the packet forwarding method applied to the second network node according to any preceding embodiment and has corresponding functions and effects.

Embodiments of the present application further provide a storage medium including a computer-executable instruction. The computer-executable instruction, when executed by a processor of a computer, is used for performing a packet forwarding method applied to a first network node. The method includes: configuring an edge shaping delay budget for a target service flow accessed from a source client; determining an egress damping delay budget of a corresponding packet according to the edge shaping delay budget and an ingress shaping delay of each packet in the target service flow; and sending each packet in the target service flow to a second network node according to a predetermined target path so that the second network node forwards the corresponding packet in the target service flow to a destination client according to the egress damping delay budget.

Embodiments of the present application further provide a storage medium including a computer-executable instruction. The computer-executable instruction, when executed by a processor of a computer, is used for performing a packet forwarding method applied to a second network node. The method includes: receiving a target service flow sent by a first network node according to a predetermined target path, where the target path is determined according to a path delay requirement determined based on an end-to-end delay requirement of the target service flow and an edge shaping delay budget; and forwarding a corresponding packet to a destination client according to an egress damping delay budget of each packet in the target service flow.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A packet forwarding method, the method being applied to a first network node and comprising:
configuring an edge shaping delay budget for a target service flow accessed from a source client;
determining an egress damping delay budget of a corresponding packet according to the edge shaping delay budget and an ingress shaping delay of each packet in the target service flow, wherein the target service flow comprises one or more packets; and
sending the each packet in the target service flow to a second network node according to a predetermined target path so that the second network node forwards the corresponding packet in the target service flow to a destination client according to the egress damping delay budget.

2. The method of claim 1, further comprising:
determining a path delay requirement of the target service flow according to an end-to-end delay requirement of the target service flow and the edge shaping delay budget; and
determining the target path of the target service flow based on the path delay requirement.

3. The method of claim 2, further comprising:
acquiring an actual path delay of the each packet in the target service flow on the target path;
determining a delay deviation value of the corresponding packet based on the path delay requirement and the actual path delay; and
sending the delay deviation value to the second network node.

4. The method of any one of claims 1 to 3, wherein a packet header of each encapsulated packet in the target service flow carries the edge shaping delay budget and the ingress shaping delay of the corresponding packet; or a packet header of each packet in the target service flow carries the egress damping delay budget of the corresponding packet.

5. The method of any one of claims 1 to 3, wherein a packet header of each encapsulated packet in the target service flow further carries a delay deviation value of the corresponding packet.

6. The method of any one of claims 1 to 3, wherein the edge shaping delay budget is greater than or equal to a maximum ingress shaping delay corresponding to the target service flow.

7. A packet forwarding method, the method being applied to a second network node and comprising:
receiving a target service flow sent by a first network node according to a predetermined target path, wherein the target path is determined according to a path delay requirement determined based on an end-to-end delay requirement of the target service flow and an edge shaping delay budget; and
forwarding a corresponding packet to a destination client according to an egress damping delay budget of each packet in the target service flow, wherein the target service flow comprises one or more packets.

8. The method of claim 7, wherein when a packet header of each encapsulated packet in the target service flow carries the edge shaping delay budget and an ingress shaping delay of the corresponding packet, the method further comprises:
determining the egress damping delay budget of the corresponding packet in the target service flow according to the edge shaping delay budget and the ingress shaping delay.

9. The method of claim 7, wherein a buffer or queue is established at the second network node for the target service flow, and the target service flow is temporarily stored in the buffer or queue.

10. The method of claim 7, further comprising:
receiving a delay deviation value sent by the first network node, wherein the delay deviation value is determined based on the path delay requirement and an actual path delay of the corresponding packet in the target service flow; and
forwarding the corresponding packet to the destination client according to the delay deviation value and the egress damping delay budget of the each packet in the target service flow.

11. A first network node, comprising a memory and one or more processors;
wherein the memory is configured to store one or more programs; and
the one or more processors are configured to perform the packet forwarding method of any one of claims 1 to 6 when executing the one or more programs.

12. A second network node, comprising a memory and one or more processors;
wherein the memory is configured to store one or more programs; and
the one or more processors are configured to perform the packet forwarding method of any one of claims 7 to 10 when executing the one or more programs.

13. A storage medium storing a computer program, wherein when the computer program is executed by a processor, the packet forwarding method of any one of claims 1 to 6 is performed or the packet forwarding method of any one of claims 7 to 10 is performed.
